# EUROPÄISCHE PATENTSCHRIFT

(11) **EP 3 320 022 B1**
(45) Veröffentlichungstag und Bekanntmachung des Hinweises auf die Patenterteilung: **14.11.2018**
(21) Anmeldenummer: 16736103.9
(22) Anmeldetag: 05.07.2016
(51) Int. Cl.: C08G 69/16

(54) **VERFAHREN ZUR HERSTELLUNG EINES POLYAMIDS**
METHOD FOR PRODUCING A POLYAMIDE
PROCEDE DE FABRICATION D'UN POLYAMIDE

(30) Priorität: 06.07.2015 EP 15175479
(43) Veröffentlichungstag der Anmeldung: 16.05.2018
(73) Patentinhaber: BASF SE, 67056 Ludwigshafen (DE)
(72) Erfinder: DESBOIS, Philippe, 68535 Edingen-Neckarhausen (DE); ARBTER, Rene, 67251 Freinsheim (DE); BRUCHMANN, Bernd, 67251 Freinsheim (DE); STEIN, Robert, 67122 Altrip (DE); THIELBEER, Frank, 68161 Mannheim (DE); MUELHAUPT, Rolf, 79117 Freiburg (DE); ANDRAE, Tina, 09648 Mittweida (DE)
(74) Vertreter: BASF IP Association
(86) Internationale Anmeldenummer: PCT/EP2016/065878
(87) Internationale Veröffentlichungsnummer: WO 2017/005753

(56) Entgegenhaltungen:
- EP-A1- 2 447 301
- DE-A1- 4 002 260

## Beschreibung

Die vorliegende Erfindung betrifft ein Verfahren zur Herstellung eines Polyamids (P) durch Mischen einer ersten Mischung (M1), die mindestens ein Lactam und mindestens einen Katalysator enthält, mit einer zweiten Mischung (M2), die mindestens ein Lactam, mindestens einen Aktivator und mindestens ein Amin enthält, unter Erhalt einer polymerisierbaren Mischung (pM) und anschließender Polymerisation der polymerisierbaren Mischung (pM) unter Erhalt des Polyamids (P). Gegenstand der vorliegenden Erfindung ist außerdem ein Polyamid (P), erhältlich nach dem erfindungsgemäßen Verfahren, sowie Formkörper aus dem Polyamid (P).

Polyamide sind im Allgemeinen teilkristalline Polymere, die industriell von besonderer Bedeutung sind, da sie sich durch sehr gute mechanische Eigenschaften auszeichnen. Insbesondere besitzen sie eine hohe Festigkeit, Steifigkeit und Zähigkeit, eine gute Chemikalienbeständigkeit sowie eine hohe Abriebfestigkeit und Kriechstromfestigkeit. Diese Eigenschaften sind insbesondere von Bedeutung für die Herstellung von Spritzgussteilen. Eine hohe Zähigkeit ist besonders wichtig für die Verwendung von Polyamiden als Verpackungsfolien. Aufgrund ihrer Eigenschaften werden Polyamide industriell zur Herstellung von Textilien wie Angelschnüren, Kletterseilen und Teppichböden verwendet. Außerdem finden Polyamide Verwendung zur Herstellung von Dübeln, Schrauben und Kabelbindern. Darüber hinaus werden Polyamide als Lacke, Klebstoffe und Beschichtungsmaterialien eingesetzt.

Die Herstellung von Formkörpern der Polyamide erfolgt vorteilhafterweise durch Polymerisation der entsprechenden Monomere direkt in der Form, ausgehend von Monomerpulver, wobei in situ die Polymerisation gestartet wird. In der Regel ist nur ein Erhitzen auf eine Temperatur oberhalb des Schmelzpunktes des Monomers erforderlich, nicht über den Schmelzpunkt des Polymers, welcher üblicherweise höher liegt als der Schmelzpunkt des Monomers.

Im Stand der Technik sind verschiedene Verfahren zur Herstellung von Polyamiden beschrieben.

Die DE 1 495 132 beschreibt beispielsweise die Polymerisation einer Lactammischung, die ein Säurechlorid, ein Isocyanat oder Isocyanatabspalter enthalten kann, durch Zugabe einer Alkalilactamatlösung, die primäre und/oder sekundäre Mono- und/oder Polyamine enthält. Die Alkalilactamatlösung kann ebenfalls ein Säurechlorid, ein Isocyanat oder Isocyanatabspalter enthalten.

Die DE 4 002 260 beschreibt die anionische Polymerisation einer Caprolactammischung, die Säurechloride, Isocyanate, substituierte Harnstoffe, Urethane oder Guanidine enthalten kann, durch Zugabe einer Katalysatorlösung, die ein Lactam, ein Alkalimetall sowie Poly-C₁-C₄-Alkylenglycol und ein primäres und/oder sekundäres Mono- und/oder Polyamin enthält.

Nachteilig bei den im Stand der Technik beschriebenen Verfahren ist, dass die Polymerisation des Lactams sofort bei Temperaturerhöhung beginnt. Die Komponenten werden üblicherweise bereits in flüssiger Form in die Form gegeben. Daher beginnt die Polymerisation des Lactams direkt nach Einfüllen der Komponenten in die Form. Im Allgemeinen startet die Polymerisation bereits, bevor alle Komponenten vollständig in die Form eingefüllt worden sind. Dies führt zu einer ungleichmäßigen Polymerisation und daher zu teilweise instabilen oder verzogenen Formteilen. Insbesondere nachteilig ist, dass die Komponenten häufig in einem Mischkopf miteinander vermischt werden, bevor sie in die Form eingefüllt werden. Häufig beginnt die Polymerisation dann bereits im Mischkopf, was zu dessen Verstopfung führen kann.

Die der vorliegenden Erfindung zugrundeliegende Aufgabe besteht somit in der Bereitstellung eines Verfahrens zur Herstellung von Polyamiden, das die Nachteile der Verfahren, wie sie im Stand der Technik beschrieben sind, nicht oder nur in vermindertem Maße aufweist.

Gelöst wird diese Aufgabe durch ein Verfahren zur Herstellung eines Polyamids (P), umfassend die Schritte
a) Bereitstellen einer ersten Mischung (M1), die die Komponenten
   (A) mindestens ein Lactam,
   (B) mindestens einen Katalysator
   enthält,
b) Bereitstellen einer zweiten Mischung (M2), die die Komponenten
   (A) mindestens ein Lactam,
   (C) mindestens ein Aktivator,
   (D) mindestens ein Amin
   enthält,
c) Mischen der ersten Mischung (M1) mit der zweiten Mischung (M2) unter Erhalt einer polymerisierbaren Mischung (pM),
d) Polymerisation der in Schritt c) erhaltenen polymerisierbaren Mischung (pM) unter Erhalt des Polyamids (P).

Es wurde überraschend gefunden, dass durch den Einsatz einer ersten Mischung (M1) und einer zweiten Mischung (M2) in dem erfindungsgemäßen Verfahren der Beginn der Polymerisation der polymerisierbaren Mischung (pM) verzögert (retardiert) werden kann, so dass die polymerisierbare Mischung (pM) eine Induktionsperiode vor dem Polymerisationsbeginn aufweist.

Nach der Induktionsperiode läuft die Polymerisation der polymerisierbaren Mischung (pM) schnell und vollständig ab, so dass homogene Polyamide erhalten werden und somit auch die daraus hergestellten Formteile besonders homogen sind und gute mechanische Eigenschaften aufweisen. Darüber hinaus ist der Restmonomergehalt in den erhaltenen Polyamiden (P) besonders niedrig.

Die Eigenschaften des erfindungsgemäß hergestellten Polyamids (P) sind nahezu identisch mit den Eigenschaften von Polyamiden, die nach anderen im Stand der Technik beschriebenen Verfahren hergestellt werden. So weist das erfindungsgemäß hergestellte Polyamid (P) beispielsweise die gleiche Dichte und ein ähnliches Verhalten in der dynamisch-mechanischen Analyse (DMA) sowie der Differenzthermoanalyse (Differential Scanning Colorimetry, DSC) auf wie die Polyamide, die nach im Stand der Technik beschriebenen Verfahren erhältlich sind.

Mit dem erfindungsgemäß hergestellten Polyamid (P) kann eine Form, die zur Herstellung von Formteilen aus dem Polyamid (P) verwendet wird, schneller befüllt werden.

Formteile, die aus dem Polyamid (P) hergestellt werden, sind besonders gut aus der verwendeten Form zu entnehmen.

Nachfolgend wird das erfindungsgemäße Verfahren näher erläutert.

### Schritt a)

In Schritt a) wird eine erste Mischung (M1) bereitgestellt. Die erste Mischung (M1) enthält als Komponente (A) mindestens ein Lactam und als Komponente (B) mindestens einen Katalysator.

Unter "mindestens ein Lactam" wird im Rahmen der vorliegenden Erfindung sowohl genau ein Lactam als auch eine Mischung aus zwei oder mehr Lactamen verstanden. Gleiches gilt für "mindestens einen Katalysator". Unter "mindestens einem Katalysator" wird sowohl genau ein Katalysator als auch eine Mischung aus zwei oder mehr Katalysatoren verstanden.

Die erste Mischung (M1) wird auch als Katalysatorlösung oder Initiatorlösung bezeichnet.

Die erste Mischung (M1) kann außer dem mindestens einen Lactam und dem mindestens einen Katalysator noch weitere Komponenten enthalten. Weitere Komponenten sind beispielsweise Alkylenglycole, insbesondere Poly-C₂-C₄-Alkylenglycole wie beispielsweise Polyethylenglycol, Polypropylenglycol, Polytetrahydrofuran und deren Copolymere.

Weitere Komponenten, die in der ersten Mischung (M1) enthalten sein können, sind außerdem beispielsweise Reaktionsprodukte der Reaktion des mindestens einen Katalysators (Komponente (B)) mit mindestens einem Lactam (Komponente (A)). Diese Reaktionen und Reaktionsprodukte sind dem Fachmann als solche bekannt.

Bevorzugt enthält die in Schritt a) bereitgestellte erste Mischung (M1) keine weiteren Komponenten außer gegebenenfalls die Reaktionsprodukte der Reaktion des mindestens einen Katalysators (Komponente (B)) mit dem mindestens einen Lactam (Komponente (A)).

Insbesondere bevorzugt enthält die erste Mischung (M1) keine Komponente (C), mindestens einen Aktivator.

Gegenstand der vorliegenden Erfindung ist somit auch ein Verfahren, bei dem die in Schritt a) bereitgestellte erste Mischung (M1) keine Komponente (C), mindestens einen Aktivator, enthält.

Für den mindestens einen Aktivator gelten die weiter unten beschriebenen Ausführungen und Bevorzugungen für die Komponente (C) entsprechend.

Außerdem insbesondere bevorzugt enthält die erste Mischung (M1) keine Komponente (D), mindestens ein Amin.

Gegenstand der vorliegenden Erfindung ist somit auch ein Verfahren, bei dem die in Schritt a) bereitgestellte erste Mischung (M1) keine Komponente (D), mindestens ein Amin, enthält.

Gegenstand der vorliegenden Erfindung ist weiterhin ein Verfahren, bei dem die in Schritt a) bereitgestellte erste Mischung (M1) keine Komponente (C), mindestens einen Aktivator, und keine Komponente (D), mindestens ein Amin, enthält.

Die in Schritt a) bereitgestellte erste Mischung (M1) kann die Komponenten (A) und (B) in beliebigen Mengen enthalten. Bevorzugt enthält die erste Mischung (M1) im Bereich von 50 bis 99,9 Gew.-% der Komponente (A), besonders bevorzugt im Bereich von 70 bis 99 Gew.-% und insbesondere bevorzugt im Bereich von 80 bis 99 Gew.-%, bezogen auf die Summe der Gewichtsprozente der Komponenten (A) und (B), bevorzugt bezogen auf das Gesamtgewicht der ersten Mischung (M1).

Bevorzugt enthält die erste Mischung (M1) außerdem im Bereich von 0,1 bis 50 Gew.-% der Komponente (B), besonders bevorzugt im Bereich von 1 bis 30 Gew.-% und insbesondere bevorzugt im Bereich von 1 bis 20 Gew.-%, jeweils bezogen auf die Summe der Gewichtsprozente der Komponenten (A) und (B), bevorzugt bezogen auf das Gesamtgewicht der ersten Mischung (M1).

Gegenstand der vorliegenden Erfindung ist somit auch ein Verfahren, bei dem die in Schritt a) bereitgestellte erste Mischung (M1) im Bereich von 50 bis 99,9 Gew.-% der Komponente (A) und im Bereich von 0,1 bis 50 Gew.-% der Komponente (B) enthält, bevorzugt im Bereich von 70 bis 99 Gew.-% der Komponente (A) und im Bereich von 1 bis 30 Gew.-% der Komponente (B) und insbesondere bevorzugt im Bereich von 80 bis 99 Gew.-% der Komponente (A) und im Bereich von 1 bis 20 Gew.-% der Komponente (B), jeweils bezogen auf die Summe der Gewichtsprozente der Komponenten (A) und (B), bevorzugt bezogen auf das Gesamtgewicht der ersten Mischung (M1).

Die Summe der Gewichtsprozente der Komponenten (A) und (B) sowie gegebenenfalls der weiteren Komponenten, die in der ersten Mischung (M1) enthalten sind, addieren sich üblicherweise zu 100 %. Sind in der ersten Mischung (M1) keine weiteren Komponenten enthalten, so addieren sich die Gewichtsprozente der Komponenten (A) und (B) zu 100 %.

Die erste Mischung (M1) kann in allen dem Fachmann bekannten Vorrichtungen bereitgestellt werden, beispielsweise in einem Kessel oder einem Extruder.

### Komponente (A): Lactam

Erfindungsgemäß enthält die erste Mischung (M1) als Komponente (A) mindestens ein Lactam.

In der vorliegenden Erfindung werden die Begriffe "Komponente (A)" und "mindestens ein Lactam" synonym gebraucht und haben daher die gleiche Bedeutung.

Unter "Lactam" werden erfindungsgemäß zyklische Amide verstanden, die im Ring 4 bis 12 Kohlenstoffatome, bevorzugt 6 bis 12 Kohlenstoffatome aufweisen.

Gegenstand der vorliegenden Erfindung ist somit auch ein Verfahren, bei dem die Komponente (A) mindestens ein Lactam mit 4 bis 12 Kohlenstoffatomen enthält.

Geeignete Lactame sind beispielsweise ausgewählt aus der Gruppe bestehend aus 4-Aminobutansäurelactam (γ-Lactam; γ-Butyrolactam; Pyrrolidon), 5-Aminopentansäurelactam (δ-Lactam; δ-Valerolactam; Piperidon), 6-Aminohexansäurelactam (ε-Lactam; ε-Caprolactam), 7-Aminoheptansäurelactam (ζ-Lactam; ζ-Heptanolactam; Önanthlactam), 8-Aminooktansäurelactam (η-Lactam; η-Oktanolactam; Capryllactam), 9-Nonansäurelactam (θ-Lactam; θ-Nonanolactam), 10-Dekansäurelactam (ω-Dekanolactam; Caprinlactam), 11-Undekansäurelactam (ω-Undekanolactam) und 12-Dodekansäurelactam (ω-Dodekanolactam; Laurolactam).

Gegenstand der vorliegenden Erfindung ist somit auch ein Verfahren, bei dem die Komponente (A) ausgewählt ist aus der Gruppe bestehend aus Pyrrolidon, Piperidon, ε-Caprolactam, Önanthlactam, Capryllactam, Caprinlactam und Laurolactam.

Die Lactame können unsubstituiert oder zumindest monosubstituiert sein. Für den Fall, dass zumindest monosubstituierte Lactame eingesetzt werden, können diese an den Kohlenstoffatomen des Rings einen, zwei oder mehrere Substituenten tragen, die unabhängig voneinander ausgewählt sind aus der Gruppe bestehend aus C₁- bis C₁₀-Alkyl, C₅- bis C₆-Cycloalkyl und C₅- bis C₁₀-Aryl.

Bevorzugt ist die Komponente (A) unsubstituiert.

Als C₁- bis C₁₀-Alkylsubstituenten sind beispielsweise Methyl, Ethyl, Propyl, Isopropyl, n-Butyl, sec.-Butyl und tert.-Butyl geeignet. Ein geeigneter C₅- bis C₆-Cycloalkylsubstituent ist beispielsweise Cyclohexyl. Bevorzugte C₅- bis C₁₀-Arylsubstituenten sind Phenyl und Anthranyl.

Besonders bevorzugt werden unsubstituierte Lactame eingesetzt, wobei 12-Dodekansäurelactam (ω-Dodekanolactam) und ε-Lactam (ε-Caprolactam) bevorzugt sind. Am meisten bevorzugt ist ε-Lactam (ε-Caprolactam).

ε-Caprolactam ist das zyklische Amid der Capronsäure. Es wird auch als 6-Aminohexansäurelactam, 6-Hexanlactam oder Caprolactam bezeichnet. Sein IUPAC-Name lautet "Acepan-2-one". Caprolactam besitzt die CAS-Nummer 105-60-2 und die allgemeine Formel C₆H₁₁NO. Verfahren zur Herstellung von Caprolactam sind dem Fachmann bekannt.

### Komponente b): Katalysator

Erfindungsgemäß enthält die erste Mischung (M1) als Komponente (B) mindestens einen Katalysator.

In der vorliegenden Erfindung werden die Bezeichnungen "Komponente (B)" und "mindestens ein Katalysator" synonym gebraucht und haben daher die gleiche Bedeutung.

Der mindestens eine Katalysator ist bevorzugt ein Katalysator für die anionische Polymerisation eines Lactams. Daher ermöglicht der mindestens eine Katalysator bevorzugt die Bildung von Lactamanionen. Der mindestens eine Katalysator ist also in der Lage, Lactamate zu bilden, indem er das stickstoffgebundene Proton des mindestens einen Lactams (Komponente (A)) abspaltet.

Lactamanionen an sich können ebenfalls als der mindestens eine Katalysator fungieren. Der mindestens eine Katalysator kann auch als Initiator bezeichnet werden.

Geeignete Komponenten (B) sind dem Fachmann als solche bekannt und beispielsweise in "Polyamide. Kunststoff-Handbuch", Carl-Hanser-Verlag 1998, beschrieben.

Bevorzugt ist die Komponente (B) ausgewählt aus der Gruppe bestehend aus Alkalimetalllactamaten, Erdalkalimetalllactamaten, Alkalimetallen, Erdalkalimetallen, Alkalimetallhydriden, Erdalkalimetallhydriden, Alkalimetallhydroxiden, Erdalkalimetallhydroxiden, Alkalimetallalkoholaten, Erdalkalimetallalkoholaten, Alkalimetallamiden, Erdalkalimetallamiden, Alkalimetalloxiden, Erdalkalimetalloxiden und metallorganischen Verbindungen.

Gegenstand der vorliegenden Erfindung ist somit auch ein Verfahren, bei dem die Komponente (B) ausgewählt ist aus der Gruppe bestehend aus Alkalimetalllactamaten, Erdalkalimetalllactamaten, Alkalimetallen, Erdalkalimetallen, Akalimetallhydriden, Erdalkalimetallhydriden, Alkalimetallhydroxiden, Erdalkalimetallhydroxiden, Alkalimetallalkoholaten, Erdalkalimetallalkoholaten, Alkalimetallamiden, Erdalkalimetallamiden, Alkalimetalloxiden, Erdalkalimetalloxiden und metallorganischen Verbindungen.

Besonders bevorzugt ist die Komponente (B) ausgewählt aus Alkalimetalllactamaten und Erdalkalimetalllactamaten.

Alkalimetalllactamate sind dem Fachmann als solche bekannt. Geeignete Alkalimetalllactamate sind beispielsweise Natriumcaprolactamat sowie Kaliumcaprolactamat.

Geeignete Erdalkalimetalllactamate sind beispielsweise Bromid-Magnesiumcaprolactamat, Chlorid-Magnesiumcaprolactamat und Magnesium-biscaprolactamat. Geeignete Alkalimetalle sind beispielsweise Natrium und Kalium, geeignete Erdalkalimetalle sind beispielsweise Magnesium und Kalzium. Geeignete Alkalimetallhydride sind beispielsweise Natriumhydrid und Kaliumhydrid, geeignete Alkalimetallhydroxide sind beispielsweise Natriumhydroxid und Kaliumhydroxid. Geeignete Alkalimetallalkoholate sind beispielsweise Natriummethanolat, Natriumethanolat, Natriumpropanolat, Natriumbutanolat, Kaliummethanolat, Kaliumethanolat, Kaliumpropanolat und Kaliumbutanolat.

In einer weiteren insbesondere bevorzugten Ausführungsform ist die Komponente (B) ausgewählt aus der Gruppe bestehend aus Natriumhydrid, Natrium, Natriumcaprolactamat und einer Lösung von Natriumcaprolactamat in Caprolactam. Besonders bevorzugt ist Natriumcaprolactamat und/oder eine Lösung von Natriumcaprolactamat in Caprolactam (zum Beispiel Brüggolen C10, 17 bis 19 Gew.-% Natriumcaprolactamat und Caprolactam). Der mindestens eine Katalysator kann als Feststoff oder in Lösung eingesetzt werden. Bevorzugt wird der mindestens eine Katalysator als Feststoff eingesetzt. Der Katalysator wird insbesondere bevorzugt in eine Caprolactamschmelze gegeben, in der er gelöst werden kann.

Dem Fachmann ist klar, dass, wenn die Komponente (B) beispielsweise ein Alkalimetall ist, dieses bei Kontakt mit dem mindestens einen Lactam (Komponente (A)) reagiert und dabei ein Alkalimetalllactamat bildet.

### Schritt b

In Schritt b) wird die zweite Mischung (M2) bereitgestellt. Die zweite Mischung (M2) enthält als Komponente (A) mindestens ein Lactam, als Komponente (C) mindestens einen Aktivator und als Komponente (D) mindestens ein Amin.

Unter "mindestens einem Aktivator" wird im Rahmen der vorliegenden Erfindung sowohl genau ein Aktivator als auch eine Mischung aus zwei oder mehr Aktivatoren verstanden. Unter "mindestens einem Amin" wird im Rahmen der vorliegenden Erfindung sowohl genau ein Amin als auch eine Mischung aus zwei oder mehr Aminen verstanden.

Die zweite Mischung (M2) kann in allen dem Fachmann bekannten Behältern bereitgestellt werden. Beispielsweise kann die zweite Mischung (M2) in einem Kessel, einem Extruder oder einem Tank bereitgestellt werden.

Die zweite Mischung (M2) enthält bevorzugt im Bereich von 50 bis 99,8 Gew.-%, besonders bevorzugt im Bereich von 70 bis 98 Gew.-% und insbesondere bevorzugt im Bereich von 85 bis 95 Gew.-% der Komponente (A), bezogen auf die Summe der Gewichtsprozente der Komponenten (A), (C) und (D), bevorzugt bezogen auf das Gesamtgewicht der zweiten Mischung (M2).

Die zweite Mischung (M2) enthält außerdem bevorzugt im Bereich von 0,1 bis 25 Gew.-%, besonders bevorzugt im Bereich von 1 bis 15 Gew.-% und insbesondere bevorzugt im Bereich von 2,5 bis 7,5 Gew.-% der Komponente (C), bezogen auf die Summe der Gewichtsprozente der Komponenten (A), (C) und (D), bevorzugt auf das Gesamtgewicht der zweiten Mischung (M2).

Außerdem enthält die zweite Mischung (M2) bevorzugt im Bereich von 0,1 bis 25 Gew.-%, besonders bevorzugt im Bereich von 1 bis 15 Gew.-% und insbesondere bevorzugt im Bereich von 2,5 bis 7,5 Gew.-% der Komponente (D), jeweils bezogen auf die Summe der Gewichtsprozente der Komponenten (A), (C) und (D), bevorzugt bezogen auf das Gesamtgewicht der zweiten Mischung (M2).

Gegenstand der vorliegenden Erfindung ist somit auch ein Verfahren, bei dem die in Schritt b) bereitgestellte zweite Mischung (M2) im Bereich von 50 bis 99,8 Gew.-% der Komponente (A), im Bereich von 0,1 bis 25 Gew.-% der Komponente (C) und im Bereich von 0,1 bis 25 Gew.-% der Komponente (D) enthält, jeweils bezogen auf die Summe der Gewichtsprozente der Komponenten (A), (C) und (D), bevorzugt bezogen auf das Gesamtgewicht der zweiten Mischung (M2).

Die zweite Mischung (M2) kann darüber hinaus noch weitere Komponenten enthalten wie beispielsweise Reaktionsprodukte der Reaktion des mindestens einen Aktivators mit dem mindestens einen Lactam. Derartige Reaktionen und Reaktionsprodukte sind dem Fachmann bekannt.

Bevorzugt enthält die zweite Mischung (M2) keine weiteren Komponenten.

Insbesondere bevorzugt enthält die zweite Mischung (M2) keine Komponente (B), mindestens einen Katalysator.

Gegenstand der vorliegenden Erfindung ist somit auch ein Verfahren, bei dem die in Schritt b) bereitgestellte zweite Mischung (M2) keine Komponente (B), mindestens einen Katalysator, enthält.

Die Summe der Gewichtsprozente der Komponenten (A), (C) und (D) sowie gegebenenfalls der weiteren Komponenten addieren sich üblicherweise zu 100 %. Enthält die zweite Mischung (M2) keine weiteren Komponenten, so addieren sich die Gewichtsprozente der Komponenten (A), (C) und (D) üblicherweise zu 100 %.

Die Komponente (A), die in der zweiten Mischung (M2) enthalten ist, kann gleich oder verschieden von der Komponente (A), die in der ersten Mischung (M1) enthalten ist, sein. Bevorzugt ist das mindestens eine Lactam (Komponente (A)), das in der zweiten Mischung (M2) enthalten ist, gleich der Komponente (A), dem mindestens einen Lactam, das in der ersten Mischung (M1) enthalten ist.

Für die Komponente (A), die in der zweiten Mischung (M2) enthalten ist, gelten die zuvor für die Komponente (A), die in der ersten Mischung (M1) enthalten ist, beschriebenen Ausführungen und Bevorzugungen entsprechend.

### Komponente (C): Aktivator

Die zweite Mischung (M2) enthält erfindungsgemäß als Komponente (C) mindestens einen Aktivator.

Im Rahmen der vorliegenden Erfindung werden die Begriffe "Komponente (C)" und "mindestens ein Aktivator" synonym gebraucht und haben von daher die gleiche Bedeutung.

Als der mindestens eine Aktivator eignet sich jeder dem Fachmann bekannte Aktivator, der dazu geeignet ist, die anionische Polymerisation des mindestens einen Lactams (Komponente (A)) zu aktivieren. Vorzugsweise ist der mindestens eine Aktivator ausgewählt aus der Gruppe bestehend aus N-subsituierten Lactamen, Diisocyanaten, Polyisocyanaten, Allophanaten und Disäurehalogeniden, besonders bevorzugt ist der mindestens eine Aktivator ausgewählt aus der Gruppe bestehend aus N-substituierten Lactamen.

Gegenstand der vorliegenden Erfindung ist somit auch ein Verfahren, bei dem die Komponente (C) ausgewählt ist aus N-substituierten Lactamen, Diisocyanaten, Polyisocyanaten, Allophanaten und Disäurehalogeniden.

Bevorzugt sind die N-substituierten Lactame elektrophil N-substituiert. Als elektrophil N-substituierte Lactame eignen sich beispielsweise Acyllactame wie beispielsweise N-Acetylcaprolactam oder deren Vorstufen, welche zusammen mit dem mindestens einen Lactam (Komponente (A)) in situ ein aktiviertes Lactam bilden. Ein weiteres geeignetes N-substituiertes Lactam ist beispielsweise ein gecapptes Diisocyanat.

Als Diisocyanate können sowohl aliphatische Diisocyanate als auch aromatische Diisocyanate eingesetzt werden. Zu den aliphatische Diisocyanaten zählen beispielsweise Butylendiisocyanat, Hexamethylendiisocyanat, Octamethylendiisocyanat, Decamethylendiisocyanat, Undodecamethylendiisocyanat, Dodecamethylendiisocyanat, 4,4'-Methylenbis (cyclohexylisocyanat) und Isophorondiisocyanat. Aromatische Diisocyanate sind beispielsweise Toluyldiisocyanat, 4,4'-Methylenbis(phenyl)isocyanat. Polyisocyanate sind zum Beispiel Isocyanate von Hexamethylendiisocyanat (Basonat HI 100/BASF SE). Geeignete Allophanate sind zum Beispiel Ethylallophanate.

Als Disäurehalogenide eignen sich sowohl aliphatische Disäurehalogenide als auch aromatische Disäurehalogenide. Als aliphatische Disäurehalogenide eignen sich Verbindungen wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid, 4,4'-Methylenbis(cyclohexylsäurechlorid), 4,4'-Methylenbis(cyclohexylsäurebromid), Isophorondisäurechlorid, Isophorondisäurebromid; als auch aromatische Disäurehalogenide, wie Toluylmethylenldisäurechlorid, Toluylmethylendisäurechlorid, 4,4'-Methylenbis(phenyl)säurechlorid, 4,4'-Methylenbis(phenyl)säurebromid.

In einer bevorzugten Ausführungsform ist die Komponente (C) ausgewählt aus der Gruppe bestehend aus Hexamethylendiisocyanat, Isophorondiisocyanat, Hexamethylendisäurebromid, Hexamethylendisäurechlorid und deren Mischungen; besonders bevorzugt wird Hexamethylendiisocyanat eingesetzt.

Der mindestens eine Aktivator kann in Lösung eingesetzt werden. Insbesondere kann der mindestens eine Aktivator in Caprolactam gelöst werden.

Geeignet als mindestens ein Aktivator ist außerdem beispielsweise Brüggolen® C20, 80% Caprolactam-blockiertes 1,6-Hexamethylendiisocyanat in Caprolactam der Firma Brüggemann, DE.

### Komponente (D): Amin

Erfindungsgemäß enthält die zweite Mischung (M2) als Komponente (D) mindestens ein Amin.

Die Bezeichnungen "Komponente (D)" und "mindestens ein Amin" werden im Rahmen der vorliegenden Erfindung synonym gebraucht und haben daher die gleiche Bedeutung.

Das mindestens eine Amin enthält bevorzugt zumindest eine NH-Gruppe und/oder zumindest eine NH₂-Gruppe.

Die zumindest eine NH-Gruppe und/oder die zumindest eine NH₂-Gruppe können auch als protonierte NH-Gruppe und/oder als protonierte NH₂-Gruppe vorliegen. Die protonierte NH-Gruppe liegt als NH₂⁺-Gruppe vor, die protonierte NH₂-Gruppe liegt als NH₃⁺-Gruppe vor. Protonierte NH-Gruppen und protonierte NH₂-Gruppen werden im Rahmen der vorliegenden Erfindung ebenfalls unter den Begriffen NH-Gruppe und NH₂-Gruppe zusammengefasst. Zur Bestimmung der weiter unten beschriebenen Aminofunktionalität des mindestens einen Amins wird daher auch die Anzahl der protonierten NH-Gruppen und die Anzahl der protonierten NH₂-Gruppen aufsummiert.

Dem Fachmann ist klar, dass protonierte NH-Gruppen und/oder protonierte NH₂-Gruppen des mindestens einen Amins während der Polymerisation der polymerisierbaren Mischung (pM) deprotoniert werden können, und dann wieder als NH- Gruppe und/oder NH₂-Gruppe vorliegen. Dies ist insbesondere der Fall, wenn die Polymerisation der polymerisierbaren Mischung (pM) anionisch erfolgt.

Gegenstand der vorliegenden Erfindung ist somit auch ein Verfahren, bei dem die Komponente (D) zumindest eine NH-Gruppe oder NH₂-Gruppe enthält.

Das mindestens eine Amin besitzt bevorzugt einen pKa-Wert von weniger als 26,4.

Es ist darüber hinaus bevorzugt, dass das mindestens eine Amin eine Aminofunktionalität von < 10, bevorzugt von < 6 und insbesondere bevorzugt von < 3 aufweist.

Das mindestens eine Amin weist außerdem bevorzugt eine Aminofunktionalität von mindestens 1 auf.

Unter der "Aminofunktionalität" wird im Rahmen der vorliegenden Erfindung die Summe der Anzahl an NH-Gruppen und der Anzahl an NH₂-Gruppen, die in dem mindestens einen Amin enthalten sind, verstanden.

Eine im Rahmen der vorliegenden Erfindung bevorzugte Komponente (D) ist beispielsweise 1,12-Diaminododekan. 1,12-Diaminododekan enthält zwei NH₂-Gruppen. Somit weist 1,12-Diaminododekan ein Aminofunktionalität von 2 auf. Pyrazol ist ebenfalls eine bevorzugte Komponente (D). Pyrazol enthält eine NH-Gruppe und weist daher eine Aminofunktionalität von 1 auf.

Gegenstand der vorliegenden Erfindung ist somit auch ein Verfahren, bei dem die Komponente (D) eine Aminofunktionalität von < 10 aufweist.

Weiterhin ist es bevorzugt, dass das molare Masse des mindestens einen Amins < 500 g/mol, bevorzugt < 200 g/mol und insbesondere bevorzugt < 100 g/mol liegt.

Das mindestens eine Amin weist üblicherweise ein molare Masse von mindestens 20 g/mol, bevorzugt von mindestens 30 g/mol und insbesondere bevorzugt von mindestens 50 g/mol auf.

Gegenstand der vorliegenden Erfindung ist somit auch ein Verfahren, bei dem die molare Masse der Komponente (D) < 500 g/mol ist

Vorzugsweise ist das mindestens eine Amin ausgewählt aus der Gruppe bestehend aus primären aliphatischen Aminen, primären cycloaliphatischen Aminen, sekundären aliphatischen Aminen, sekundären cycloaliphatischen Aminen und sekundären aromatischen Aminen.

Gegenstand der vorliegenden Erfindung ist somit auch ein Verfahren, bei dem die Komponente (D) ausgewählt ist aus der Gruppe bestehend aus primären aliphatischen Aminen, primären cycloaliphatischen Aminen, sekundären aliphatischen Aminen, sekundären cycloaliphatischen Aminen und sekundären aromatischen Aminen.

Diese Amine sind dem Fachmann als solche bekannt. Insbesondere bevorzugt ist das mindestens eine Amin ausgewählt aus der Gruppe bestehen aus Octadecylamin, Pentylamin, Hexylamin, Heptylamin, Nonylamin, Decylamin, 1,12-Diaminododecan, Ethylendiamin, Propan-1,3-diamin, Butan-1,4-diamin, Pentan-1,5-diamin, Hexan-1,6-diamin, Heptan-1,7-diamin, Octan-1,8-diamin, Nonan-1,9-diamin, Decan-1,10-diamin, Diethylentriamin, Triethylentetramin, Dipropylentriamin, Cyclohexylamin, Isophorondiamin, 4,4'-Diaminodicyclohexylmethan, Dipropylamin, Dibutylamin, Dipentylamin, Dihexylamin, Diheptylamin, Dioctylamin, Dinonylamin, Didecylamin, Piperidin, Piperazin, Dicyclohexylamin, Pyrazol und Imidazol. Am meisten bevorzugt ist das mindestens eine Amin Pyrazol.

Gegenstand der vorliegenden Erfindung ist somit auch ein Verfahren, bei dem die Komponente (D) ausgewählt ist aus der Gruppe bestehend aus Octadecylamin, Pentylamin, Hexylamin, Heptylamin, Nonylamin, Decylamin, 1,12-Diaminododecan, Ethylendiamin, Propan-1,3-diamin, Butan-1,4-diamin, Pentan-1,5-diamin, Hexan-1,6-diamin, Heptan-1,7-diamin, Octan-1,8-diamin, Nonan-1,9-diamin, Decan-1,10-diamin, Diethylentriamin, Triethylentetramin, Dipropylentriamin, Cyclohexylamin, Isophorondiamin, 4,4'-Diaminodicyclohexylmethan, Dipropylamin, Dibutylamin, Dipentylamin, Dihexylamin, Diheptylamin, Dioctylamin, Dinonylamin, Didecylamin, Piperidin, Piparazin, Dicyclohexylamin, Pyrazol und Imidazol.

Insbesondere bevorzugt ist die Komponente (D) ausgewählt aus Imidazol, Octadecylamin, 1,12-Diaminododecan, Piperidin, Dibutylamin und Pyrazol.

### Schritt c)

In Schritt c) wird die erste Mischung (M1) mit der zweiten Mischung (M2) unter Erhalt einer polymerisierbaren Mischung (pM) gemischt.

Zum Mischen der ersten Mischung (M1) mit der zweiten Mischung (M2) eignen sich alle dem Fachmann bekannten Methoden. Beispielsweise werden die erste Mischung (M1) und die zweite Mischung (M2) gemischt, während sie in eine Form injiziert werden.

Die erste Mischung (M1) und die zweite Mischung (M2) können direkt in der Form vermischt werden unter Erhalt der polymerisierbaren Mischung (pM). Ebenso ist es möglich und erfindungsgemäß bevorzugt, dass die erste Mischung (M1) und die zweite Mischung (M2) in einer geeigneten Mischvorrichtung gemischt werden unter Erhalt der polymerisierbaren Mischung (pM), die dann nachfolgend in eine Form eingebracht wird. Bevorzugt wird die polymerisierbare Mischung (pM) hergestellt und nachfolgend in eine Form eingebracht. Derartige Mischvorrichtungen sind dem Fachmann als solche bekannt und beispielsweise statische und/oder dynamische Mischer.

Die Temperatur beim Mischen der ersten Mischung (M1) mit der zweiten Mischung (M2) kann in einem beliebigen Bereich liegen. Bevorzugt liegt diese Temperatur im Bereich von 80 bis 140 °C, besonders bevorzugt im Bereich von 100 bis 130 °C und am meisten bevorzugt im Bereich von 110 bis 125 °C.

Gegenstand der vorliegenden Erfindung ist somit auch ein Verfahren, bei dem in Schritt c) die erste Mischung (M1) mit der zweiten Mischung (M2) bei einer Temperatur im Bereich von 80 bis 140 °C gemischt wird.

Verfahrensschritt c) kann bei beliebigem Druck durchgeführt werden.

Die in Schritt c) erhaltene polymerisierbare Mischung (pM) liegt bevorzugt in flüssiger Form vor.

Die polymerisierbare Mischung (pM) wird vorzugsweise erhalten durch Mischen von im Bereich von 1 bis 99 Gew.-%, bevorzugt im Bereich von 4 bis 98 Gew.-% und am meisten bevorzugt im Bereich von 45 bis 55 Gew.-% der ersten Mischung (M1) mit im Bereich von 1 bis 99 Gew.-%, bevorzugt im Bereich von 2 bis 96 Gew.-% und insbesondere bevorzugt im Bereich von 45 bis 55 Gew.-% der zweiten Mischung (M2), bezogen auf die Summe der Gewichtsprozente der ersten Mischung (M1) und der zweiten Mischung (M2), besonders bevorzugt bezogen auf das Gesamtgewicht der polymerisierbaren Mischung (pM).

Somit enthält die in Schritt c) erhaltene polymerisierbare Mischung (pM) beispielsweise im Bereich von 1 bis 99 Gew.-% der ersten Mischung (M1) und im Bereich von 1 bis 99 Gew.-% der zweiten Mischung (M2), bevorzugt im Bereich von 4 bis 98 Gew.-% der ersten Mischung (M1) und 2 bis 96 Gew.-% der zweiten Mischung (M2) und am meisten bevorzugt im Bereich von 45 bis 55 Gew.-% der ersten Mischung (M1) und im Bereich von 45 bis 55 Gew.-% der zweiten Mischung (M2), jeweils bezogen auf die Summe der Gewichtsprozente der ersten Mischung (M1) und der zweiten Mischung (M2), bevorzugt bezogen auf das Gesamtgewicht der polymerisierbaren Mischung (pM).

Für den Fachmann ist klar, dass die in Schritt c) erhaltene polymerisierbare Mischung (pM) die gleichen Komponenten (A), (B), (C) und (D) sowie gegebenenfalls die weiteren Komponenten enthält, die die in Schritt a) bereitgestellte erste Mischung (M1) und die in Schritt b) bereitgestellte zweite Mischung (M2) enthalten haben.

Für den Fachmann ist außerdem klar, dass die Komponenten, die in der ersten Mischung (M1) und in der zweiten Mischung (M2) enthalten waren, in der polymerisierbaren Mischung (pM) auch bereits teilweise miteinander reagiert haben können. Bevorzugt wird dabei allerdings noch kein Polyamid (P) gebildet. Derartige Reaktionen sind dem Fachmann bekannt, beispielsweise die Reaktion des mindestens einen Katalysators (Komponente (B)) mit dem mindestens einen Lactam (Komponente (A)), die ein Lactamat bilden können.

Die polymerisierbare Mischung (pM) erhält üblicherweise im Bereich von 55 bis 99,7 Gew.-% der Komponente (A), bevorzugt im Bereich von 76 bis 99 Gew.-% und insbesondere bevorzugt im Bereich von 85 bis 98 Gew.-% der Komponente (A), bezogen auf die Summe der Gewichtsprozente der Komponenten (A), (B), (C) und (D), bevorzugt bezogen auf das Gesamtgewicht der polymerisierbaren Mischung (pM).

Darüber hinaus enthält die in Schritt c) erhaltene polymerisierbare Mischung (pM) üblicherweise im Bereich von 0,1 bis 10 Gew.-% der Komponente (B), bevorzugt im Bereich von 0,1 bis 7 Gew.-% und insbesondere bevorzugt im Bereich von 0,1 bis 5 Gew.-%, jeweils bezogen auf die Summe der Gewichtsprozente der Komponenten (A), (B), (C) und (D), bevorzugt bezogen auf das Gesamtgewicht der polymerisierbaren Mischung (pM).

Außerdem enthält die polymerisierbare Mischung (pM) üblicherweise im Bereich von 0,1 bis 10 Gew.-% der Komponente (C), bevorzugt im Bereich von 0,1 bis 7 Gew.-% und insbesondere bevorzugt im Bereich von 0,1 bis 5 Gew.-%, jeweils bezogen auf die Summe der Gewichtsprozente der Komponenten (A), (B), (C) und (D), bevorzugt bezogen auf das Gesamtgewicht der polymerisierbaren Mischung (pM).

Die polymerisierbare Mischung (pM) enthält darüber hinaus üblicherweise im Bereich von 0,1 bis 25 Gew.-% der Komponente (D), bevorzugt im Bereich von 0,1 bis 10 Gew.-% und insbesondere bevorzugt im Bereich von 0,1 bis 5 Gew.-%, jeweils bezogen auf die Summe der Gewichtsprozente der Komponenten (A), (B), (C) und (D), bevorzugt bezogen auf das Gesamtgewicht der polymerisierbaren Mischung (pM).

Gegenstand der vorliegenden Erfindung ist somit auch ein Verfahren, bei dem die in Schritt c) erhaltene polymerisierbare Mischung (pM) im Bereich von 55 bis 99,7 Gew.-% der Komponente (A), im Bereich von 0,1 bis 10 Gew.-% der Komponente (B), im Bereich von 0,1 bis 10 Gew.-% der Komponente (C) und im Bereich von 0,1 bis 25 Gew.-% der Komponente (D) enthält, jeweils bezogen auf das Gesamtgewicht der polymeriserbaren Mischung (pM).

Die Gewichtsprozent der in der polymerisierbaren Mischung (pM) enthaltenen Komponenten (A), (B), (C) und (D) addieren sich üblicherweise zu 100 %.

So weit nicht anders angegeben, beziehen sich sämtliche Gewichtsprozente der Komponenten (A), (B), (C) und (D) auf die Komponenten (A), (B), (C) und (D) bevor die Komponenten miteinander reagiert haben.

### Schritt d)

In Schritt d) wird die in Schritt c) erhaltene polymerisierbare Mischung (pM) unter Erhalt des Polyamids (P) polymerisiert.

Die polymerisierbare Mischung (pM) kann beispielsweise in dem gleichen Behälter polymerisiert werden, in dem sie durch Mischen der ersten Mischung (M1) mit der zweiten Mischung (M2) erhalten worden ist. Ebenso ist es möglich, die polymerisierbare Mischung (pM) nach Verfahrensschritt c) und vor Verfahrensschritt d) in einen Behälter zu überführen, in dem die polymerisierbare Mischung (pM) dann polymerisiert wird.

Wird die polymerisierbare Mischung (pM) beispielsweise in Schritt c) in einer Form erhalten, so kann sie in Schritt d) darin polymerisiert werden. Wird die polymerisierbare Mischung (pM) in Schritt c) dagegen in einer Mischvorrichtung erhalten, so kann sie anschließend in eine Form überführt und dann in Schritt d) darin polymerisiert werden.

Verfahrensschritt d) wird üblicherweise bei einer Temperatur im Bereich von 130 bis 160 °C, bevorzugt im Bereich von 135 bis 155 °C und insbesondere bevorzugt im Bereich von 140 bis 150 °C durchgeführt.

Schritt d) kann bei beliebigem Druck durchgeführt werden.

Die Polymerisation der in Schritt c) erhaltenen polymerisierbaren Mischung (pM) beginnt üblicherweise nach einer Induktionsperiode im Bereich von 0,1 bis 20 Minuten, bevorzugt im Bereich von 1 bis 15 Minuten und insbesondere im Bereich von 2 bis 12 Minuten.

Die Induktionsperiode wird erfindungsgemäß wie nachfolgend beschrieben bestimmt.

In einem 100 ml Glas-Kalorimeterreaktor, der mit einem fettfreien Teflonstopfen verschlossen und mit einem Thermoelement versehen wird, wird die erste Mischung (M1) (0,4 g) unter Schutzgasatmosphäre (Stickstoff) vorgelegt und auf die Temperatur, bei der die Polymerisation der polymerisierbaren Mischung (pM) gemäß Schritt d) stattfindet, beispielsweise 140 °C, erhitzt. Nach Erreichen der Temperatur wird die zweite Mischung (M2) (9,6 g) unter Rühren zu der ersten Mischung (M1) gegeben und so die polymerisierbare Mischung (pM) erhalten. Während der Zugabe der zweiten Mischung (M2) zu der ersten Mischung (M1) kühlt die erste Mischung ab. Der Zeitpunkt, zu dem die zweite Mischung (M2) vollständig zu der ersten Mischung (M1) gegeben worden ist, wird als Startzeitpunkt t_{Start} bezeichnet. Der Startzeitpunkt t_{Start} gibt den Zeitpunkt an, ab dem die Induktionsperiode gemessen wird. Es ist auch möglich, die zweite Mischung (M2) vorzulegen und die erste Mischung (M1) nach Erreichen der Temperatur, bei der die Polymerisation der polymerisierbaren Mischung (pM) gemäß Schritt d) stattfindet, zuzugeben. Der Startzeitpunkt t_{Start} ist dann der Zeitpunkt, zu dem die erste Mischung (M1) vollständig zu der zweiten Mischung (M2) gegeben worden ist. Diese Ausführungsform ist bevorzugt.

Der 100-ml-Glaskalorimeterreaktor wird passgenau in einen Julabo-Wärmethermostat mit Ölbad eingefügt. Die Temperaturaufzeichnung erfolgt mit einem Ahlborn Almemo 2590 als Messgerät, als Thermoelement wird ein Mantel-Thermoelement Typ K (NiCr-Ni) mit einem Hülsendurchmesser von 1,0 mm und einer Hülsenlänge von 250 mm eingesetzt. Diese Thermoelemente sind beispielsweise erhältlich bei "Fühlersysteme eNET international".

Sobald der Startzeitpunkt t_{Start} erreicht worden ist, wird die polymerisierbare Mischung (pM) erneut auf die Temperatur, bei der die Polymerisation der polymerisierbaren Mischung (pM) gemäß Schritt d) stattfindet, beispielsweise 140 °C, erhitzt. Ab dem Startzeitpunkt t_{Start} wird die Temperatur der polymerisierbaren Mischung (pM) mit dem Thermoelement in Abhängigkeit von der Zeit gemessen.

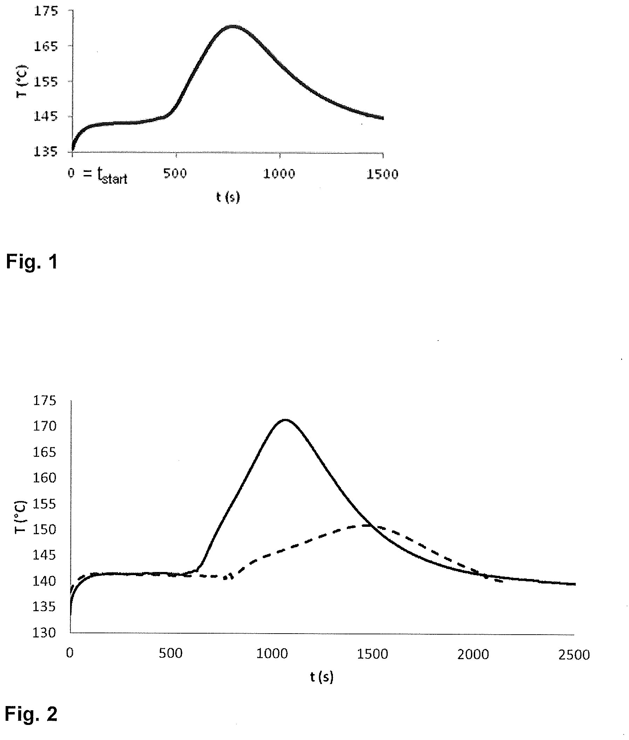

Dabei wird eine Kurve erhalten, wie sie in Figur 1 zu sehen ist. Auf der x-Achse ist die Zeit t in Sekunden (s) aufgetragen, auf der y-Achse die Temperatur T der polymerisierbaren Mischung in °C. Der Startzeitpunkt tₛₜₐᵣₜ ist mit 0 gekennzeichnet. Beginnend mit dem Startzeitpunkt t_{Start} erhöht sich die Temperatur der polymerisierbaren Mischung (pM) zunächst, da die polymerisierbare Mischung (pM) auf die Temperatur, bei der die Polymerisation der polymerisierbaren Mischung (pM) in Schritt d) stattfindet, erhitzt wird. Sobald diese Temperatur erreicht ist, bleibt die Temperatur für einen Zeitraum t_{const} nahezu unverändert. Unter "nahezu unverändert" wird eine Temperaturänderung von höchstens +/- 10 °C, bevorzugt von höchstens +/-7 °C und insbesondere bevorzugt von höchstens +/- 5 °C verstanden.

Nach dem Zeitraum t_{const}, in dem die Temperatur nahezu unverändert bleibt, erhöht sich die Temperatur mit Beginn der Polymerisation der polymerisierbaren Mischung (pM) zum Zeitpunkt t_{poly} im Allgemeinen um beispielsweise 10 bis 70 °C, bevorzugt um 15 bis 50 °C und insbesondere bevorzugt um 20 bis 40 °C. Ohne die Erfindung hierauf beschränken zu wollen, besteht die Vorstellung, dass die Temperaturerhöhung darauf zurückzuführen ist, dass die Polymerisation der polymerisierbaren Mischung (pM) exotherm verläuft. Auch die Kristallisation des sich während der Polymerisation der polymerisierbaren Mischung (pM) bildenden Polyamids (P) verläuft exotherm. Die Temperaturerhöhung ist somit also sowohl auf die exotherme Polymerisation der polymerisierbaren Mischung (pM) als auch auf die exotherme Kristallisation des gebildeten Polyamids (P) zurückzuführen. Dabei wird eine maximale Temperatur Tₘₐₓ nach einem Zeitraum tₘₐₓ erreicht. Anschließend kühlt die polymerisierbare Mischung (pM) ab, wobei das Polyamid (P) erhalten wird.

Die Zeitpunkt t_{poly}, zu dem die Polymerisation der polymerisierbaren Mischung (pM) beginnt, wird erfindungsgemäß bestimmt, indem eine Tangente an den Wendepunkt in den Bereich der nahezu unveränderten Temperatur angelegt wird und eine weitere Tangente an den Wendepunkt im Bereich der Temperaturerhöhung um beispielsweise 10 bis 70 °C, bevorzugt 15 bis 50 °C und insbesondere bevorzugt 20 bis 40 °C angelegt wird. Die senkrechte Extrapolation des Schnittpunktes der beiden Tangenten auf die Zeitachse gibt dann den Zeitpunkt t_{Poly} an, bei dem die Polymerisation der polymerisierbaren Mischung (pM) beginnt.

In einer weiteren Ausführungsform der vorliegenden Erfindung wird der Zeitpunkt t_{Poly}, bei dem die Polymerisation der polymerisierbaren Mischung (pM) beginnt, durch Messung der Heizrate β in der polymerisierbaren Mischung (pM) bestimmt. Die Heizrate β kann aus der Kurve, die die Temperatur der polymerisierbaren Mischung (pM) in Abhängigkeit von der Zeit angibt und wie vorstehend beschrieben ermittelt wird, bestimmt werden. Die Heizrate β ist definiert als die Änderung der Temperatur der polymerisierbaren Mischung (pM) in Abhängigkeit von der Zeit. Zum Startzeitpunkt t_{Start} bis zum Erreichen der Temperatur, bei der die Polymerisation der polymerisierbaren Mischung (pM) in Schritt d) durchgeführt wird, liegt die Heizrate β im Allgemeinen im Bereich von 1 bis 6 K/min. Es gilt also 1 < β < 6 K/min. Während des Zeitraums t_{const}, während dessen die Temperatur nahezu unverändert ist, liegt die Heizrate β unterhalb von 1 K/min, es gilt also β < 1 K/min. Mit Beginn der Polymerisation der polymerisierbaren Mischung (pM) und damit ab dem Zeitpunkt t_{Poly} liegt die Heizrate β über 2 K/min, es gilt also β > 2 K/min. Die Zeitpunkt t_{Poly} des Beginns der Polymerisation der polymerisierbaren Mischung (pM) ist dann also definiert als der erste Zeitpunkt, bei dem gilt β > 2 K/min, nachdem der Zeitraum t_{const} abgelaufen ist.

Die Zeit, die ab dem Startzeitpunkt t_{Start}, bei dem die zweite Mischung (M2) vollständig zu der ersten Mischung (M1) gegeben worden ist oder die erste Mischung (M1) vollständig zu der zweiten Mischung (M2) gegeben worden ist, bis zum Erreichen des Zeitpunkts t_{Poly}, bei dem die Polymerisation der polymerisierbaren Mischung (pM) beginnt, vergeht, ist erfindungsgemäß definiert als die Induktionsperiode.

Die Polymerisation der polymerisierbaren Mischung (pM) wird durch das erfindungsgemäße Verfahren also für einen Zeitraum im Bereich von 0,1 bis 20 min, bevorzugt im Bereich von 1 bis 15 min und insbesondere bevorzugt im Bereich von 2 bis 12 min retardiert. Dieser Zeitraum wird auch als Induktionsperiode bezeichnet und wie vorstehend beschrieben bestimmt.

Gegenstand der vorliegenden Erfindung ist somit auch ein Verfahren, bei dem die Polymerisation der polymerisierbaren Mischung (pM) in Schritt d) für einen Zeitraum im Bereich von 0,1 bis 20 min retardiert wird.

Schritt c) und Schritt d) können auch gleichzeitig durchgeführt werden. Bevorzugt werden Schritt c) und Schritt d) nacheinander durchgeführt.

Das in Schritt d) erhaltene Polyamid (P) kann im Bereich von 1 bis 50 Gew.-%, bevorzugt Bereich von 1,5 bis 40 Gew.-% und insbesondere bevorzugt Bereich von 2 bis 30 Gew.-% mindestens eines Füllstoffs enthalten, bezogen auf das Gesamtgewicht des Polyamids (P).

Der mindestens eine Füllstoff kann beispielsweise bereits in der in Schritt a) bereitgestellten ersten Mischung (M1) enthalten sein, ebenso ist es möglich, dass der mindestens eine Füllstoff in der in Schritt b) bereitgestellten zweiten Mischung (M2) enthalten ist. Vorzugsweise ist der Füllstoff in der Form, in der in Schritt d) die polymerisierbare Mischung (pM) polymerisiert wird, enthalten.

Gegenstand der vorliegenden Erfindung ist somit auch ein Verfahren das in Schritt d) erhaltene Polyamid (P) zusätzlich im Bereich von 1 bis 50 Gew.-% mindestens eines Füllstoffs enthält, bezogen auf das Gesamtgewicht des Polyamids (P).

### Polyamid (P)

In Schritt d) wird das Polyamid (P) erhalten.

Die Kristallinität des Polyamids (P) liegt üblicherweise im Bereich von 10 % bis 70 %, bevorzugt im Bereich von 20 % bis 60 % und insbesondere bevorzugt im Bereich von 25 % bis 40 %, bestimmt durch dynamische Differenzkalorimetrie (differential scanning calorimetry; DSC). Verfahren zur Bestimmung der Kristallinität des Polyamids (P) mittels DSC sind dem Fachmann bekannt.

Die Schmelztemperatur des erhaltenen Polyamids (P) liegt beispielsweise im Bereich von > 160 bis 280 °C, bevorzugt im Bereich von 180 bis 250 °C und insbesondere bevorzugt im Bereich von 200 bis 230 °C.

Die Glasübergangstemperatur des erhaltenen Polyamids (P) liegt beispielsweise im Bereich von 20 bis 150 °C, bevorzugt im Bereich von 30 bis 110 °C und insbesondere bevorzugt im Bereich von 40 bis 80 °C.

Die Schmelztemperatur und die Glasübergangstemperatur des erhaltenen Polyamids (P) werden mittels dynamischer Differenzkalorimetrie (differential scanning calorimetry; DSC) bestimmt. Verfahren hierzu sind dem Fachmann bekannt.

Der Anteil an unreagierter Komponente (A) im erhaltenen Polyamid (P) liegt üblicherweise im Bereich von 0,01 bis 6 Gew.-%, bevorzugt im Bereich von 0,1 bis 3 Gew.-% und insbesondere bevorzugt im Bereich von 1 bis 2 Gew.-%, jeweils bezogen auf das Gesamtgewicht des erhaltenen Polyamids (P).

Die Viskositätszahl des erhaltenen Polyamids (P) liegt üblicherweise im Bereich von 50 bis 1000, bevorzugt im Bereich von 200 bis 800 und insbesondere bevorzugt im Bereich von 400 bis 750, bestimmt mit 96%iger Schwefelsäure als Lösungsmittel bei einer Temperatur von 25 °C mit einer DIN Ubbelohde II-Kapillare.

Gegenstand der vorliegenden Erfindung ist daher außerdem ein Polyamid (P), erhältlich nach dem erfindungsgemäßen Verfahren.

Gegenstand der vorliegenden Erfindung ist außerdem ein Formkörper aus dem erfindungsgemäßen Polyamid (P).

Nachfolgend wird die vorliegende Erfindung durch Beispiele näher erläutert, ohne sie jedoch hierauf zu beschränken.

### Beispiele

Folgende Komponenten wurden eingesetzt:
(A) Lactam
   Caprolactam (BASF SE, Ludwigshafen)
(B) Katalysator
   Brüggolen C10 (17-19 Gew.-% Natriumcaprolactamat in Caprolactam) (Brüggemann KG, Heilbronn)
(C) Aktivator
   Brüggolen C20 (80 Gew.-% Hexamethylen-1,6-dicarbamoylcaprolactam in Caprolactam) (Brüggemann KG, Heilbronn)
(D) Additive
   Pyrazol 98 % (abcr GmbH & Co. KG, Karlsruhe)
   Imidazol 99 % (Merck KGaA, Darmstadt)
   1-Octadecylamin 98 % (abcr GmbH & Co. KG, Karlsruhe) 1,12-Diaminododecane 98 % (Sigma-Aldrich, Taufkirchen)
   Piperidin 99 % (Sigma-Aldrich, Taufkirchen)
   Dibutylamin ≥ 99,5 % (Sigma-Aldrich, Taufkirchen)
   1-Methylpyrazol 97 % (abcr GmbH & Co. KG, Karlsruhe)
   1-Methylimidazol ≥ 99 % (Merck KGaA, Darmstadt)
   1,2-Dimethylimidazol 98 % (abcr GmbH & Co. KG, Karlsruhe)
   Pyridin ≥ 99,5 % (Carl Roth GmbH + Co. KG, Karlsruhe)
   *N*,*N-*Dimethylaminopyridin (DMAP) (Sigma-Aldrich, Taufkirchen) *N*,*N*-Dimethylanilin 99 % (Acros, Nidderau)

Alle Komponenten wurden unter Stickstoffatmosphäre eingewogen und für die Polymerisation vorbereitet. Das Reaktionsgefäß, ein 100 mL Glas-Kalorimeterreaktor, war mit einem fettfreien Teflonstopfen verschlossen und mit einem Thermoelement versehen. Die Polymerisationsreaktionen erfolgten unter Rühren und trockener Stickstoffatmosphäre bei 140 °C. Dabei wurde pro Sekunde ein Temperaturmesspunkt aufgezeichnet, woraus jeweils das Temperatur-Zeit-Diagramm der Reaktion erstellt wurde.

### Vergleichsbeispiel 1

9,4 g Caprolactam wurden auf 140 °C erhitzt. Nach Zugabe von 0,4 g (4 Gew.-%, 0,6 Mol-%) Katalysator (Brüggolen C10) und erneutem Erreichen der Reaktionstemperatur wurde die Polymerisation durch Hinzufügen von 0,2 g (2 Gew.-%, 0,5 Mol-%) Aktivator (Brüggolen C20) gestartet. Nach 15 min wurde die anionische Polymerisation durch Kühlung des Reaktionsgefäßes in Eiswasser (0 °C) gequencht.

### Vergleichsbeispiel 2

Vergleichsbeispiel 1 wurde wiederholt mit dem Unterschied, dass 9,325 g Caprolactam und 0,075 g (0,75 Gew.-%, 1,0 Mol-%) 1-Methylimidazol eingesetzt wurden.

### Vergleichsbeispiel 3

Vergleichsbeispiel 1 wurde wiederholt mit dem Unterschied, dass 9,315 g Caprolactam und 0,085 g (0,85 Gew.-%, 1,0 Mol-%) 1,2-Dimethylimidazol eingesetzt wurden.

### Vergleichsbeispiel 4

Vergleichsbeispiel 1 wurde wiederholt mit dem Unterschied, dass 9,325 g Caprolactam und 0,075 g (0,75 Gew.-%, 1,0 Mol-%) 1-Methylpyrazol eingesetzt wurden.

### Vergleichsbeispiel 5

Vergleichsbeispiel 1 wurde wiederholt mit dem Unterschied, dass 9,33 g Caprolactam und 0,07 g (0,7 Gew.-%, 1,0 Mol-%) Pyridin eingesetzt wurden.

### Vergleichsbeispiel 6

Vergleichsbeispiel 1 wurde wiederholt mit dem Unterschied, dass 9,29 g Caprolactam und 0,11 g (1,1 Gew.-%, 1,0 Mol-%) DMAP eingesetzt wurden.

### Vergleichsbeispiel 7

Vergleichsbeispiel 1 wurde wiederholt mit dem Unterschied, dass 9,29 g Caprolactam und 0,11 g (1,1 Gew.-%, 1,0 Mol-%) *N*,*N*-Dimethylanilin eingesetzt wurden.

Tabelle 1 gibt für die Vergleichsbeispiele 1 bis 7 die Induktionsperiode (t_{induktion}) sowie die maximale Temperatur Tₘₐₓ, die nach dem Zeitraum tₘₐₓ erreicht wird, an.

**Tabelle 1**

| Vergleichsbeispiel | Amin | t_{Induktion} [min] | tₘₐₓ [min] | Tₘₐₓ [°C] |
|---|---|---|---|---|
| 1 | -- | 0 | 1,0 | 186,6 |
| 2 | 1-Methylimidazol | 0 | 1,0 | 179,2 |
| 3 | 1,2-Dimethylimidazol | 0 | 1,2 | 175,5 |
| 4 | 1-Methylpyrazol | 0 | 1,1 | 175,6 |
| 5 | Pyridin | 0 | 1,0 | 182,7 |
| 6 | DMAP | 0 | 1,2 | 183,4 |
| 7 | *N*,*N*-Dimethylanilin | 0 | 1,1 | 183,6 |

### Beispiel 8

9,39 g Caprolactam und 0,01 g (0.1 Gew.-%, 0,2 mol-%) Imidazol wurden auf 140 °C erhitzt. Nach Zugabe von 0,2 g (2 Gew.-%, 0,5 Mol-%) Aktivator (Brüggolen C20) und erneutem Erreichen der Reaktionstemperatur wurde die Polymerisation durch Hinzufügen von 0,4 g (4 Gew.-%, 0,6 Mol-%) Katalysator (Brüggolen C10) gestartet. Nach Abühlung auf Ausgangstemperatur (45 min) wurde die anionische Polymerisation durch Kühlung des Reaktionsgefäßes in Eiswasser (0 °C) gequencht.

### Beispiel 9

Beispiel 8 wurde wiederholt mit dem Unterschied, dass 9,225 g Caprolactam und 0,175 g (1,75 Gew.-%, 0,75 Mol-%) 4-Octadecylamin eingesetzt wurden.

### Beispiel 10

Beispiel 8 wurde wiederholt mit dem Unterschied, dass 9.313 g Caprolactam und 0.087 g (0.87 Gew.-%, 0.5 mol-%) 1,12-Diaminododecan eingesetzt wurden.

### Beispiel 11

Beispiel 8 wurde wiederholt mit dem Unterschied, dass 9,344 g Caprolactam und 0,056 g (0,56 Gew.-%, 0,75 Mol-%) Piperidin eingesetzt wurden.

### Beispiel 12

Beispiel 8 wurde wiederholt mit dem Unterschied, dass 9,315 g Caprolactam und 0,085 g (0,85 Gew.-%, 0,75 Mol-%) Dibutylamin eingesetzt wurden.

### Beispiel 13

Caprolactam und Pyrazol wurden auf 140 °C erhitzt. Nach Zugabe von 0,2 g (2 Gew.-%, 0,5 Mol-%) Aktivator (Brüggolen C20) und erneutem Erreichen der Reaktionstemperatur wurde die Polymerisation durch Hinzufügen von 0,4 g (4 Gew.-%, 0,6 Mol-%) Katalysator (Brüggolen C10) gestartet. Nach Abühlung auf Ausgangstemperatur (45 min) wurde die anionische Polymerisation durch Kühlung des Reaktionsgefäßes in Eiswasser (0 °C) gequencht.

Tabelle 2 gibt die eingesetzten Mengen an Caprolactam und Pyrazol an.

**Tabelle 2**

| Beispiel | Caprolactam [g] | Pyrazol [g] | Pyrazol [Gew.-%] | Pyrazol [Mol-%] |
|---|---|---|---|---|
| 13a | 9,37 | 0,03 | 0,3 | 0,5 |
| 13b | 9,365 | 0,036 | 0,36 | 0,6 |
| 13c | 9,358 | 0,042 | 0,42 | 0,7 |
| 13d | 9,35 | 0,05 | 0,48 | 0,8 |
| 13e | 9,345 | 0,055 | 0,55 | 0,9 |
| 13f | 9,34 | 0,06 | 0,6 | 1,0 |
| 13g | 9,33 | 0,07 | 0,7 | 1,2 |
| 13h | 9,325 | 0,075 | 0,75 | 1,3 |

### Beispiel 14

9,34 g Caprolactam, 0,06 g (0,6 Gew.-%, 1,0 Mol-%) Pyrazol und 0,2 g (2 Gew.-%, 0,5 Mol-%) Aktivator (Brüggolen C20) wurden in das Reaktionsgefäß eingewogen und mittels eines Silikonseptums fest verschlossen. Die Mischung wurde für x min (x = 0, 5, 15, 22.5, 30, 60) auf 140 °C erhitzt und das Septum danach rasch durch den Teflonstopfen mit Thermoelement getauscht. Durch Hinzufügen von 0,4 g (4 Gew.-%, 0,6 Mol-%) Katalysator (Brüggolen C10) wurde die Polymerisation gestartet und nach Abühlung auf Ausgangstemperatur (45 min) durch Kühlung des Reaktionsgefäßes in Eiswasser (0 °C) gequencht.

Tabelle 3 gibt für die Beispiele 8 bis 14 die Induktionsperiode (t_{induktion}) sowie die maximale Temperatur Tₘₐₓ, die nach dem Zeitraum tₘₐₓ erreicht wird, an.

**Tabelle 3**

| Beispiel | Amin | t_{Induktion} [min] | tₘₐₓ [min] | Tₘₐₓ [°C] |
|---|---|---|---|---|
| 8 | Imidazol 0,2 mol-% | 2,4 | 6,7 | 170,5 |
| 9 | 1-Octadecylamin 0,75 Mol-% | 5,5 | 16,2 | 150,7 |
| 10 | 1,12-Diaminododecan 0,5 Mol-% | 12 | 19,8 | 146,6 |
| 11 | Piperidin 0,75 mol% | 3,8 | 7,6 | 180,7 |
| 12 | 0,75 Mol-% Dibutylamin | 2,6 | 6,7 | 185,1 |
| 13a | 0,5 Mol-% Pyrazol | 3,4 | 6,6 | 177,3 |
| 13b | 0,6 Mol-% Pyrazol | 3,7 | 7,4 | 172,9 |
| 13c | 0,7 Mol-% Pyrazol | 7,0 | 14,0 | 163,0 |
| 13d | 0,8 Mol-% Pyrazol | 7,3 | 12,8 | 172,1 |
| 13e | 0,9 Mol-% Pyrazol | 7,3 | 14,8 | 164,3 |
| 13f | 1,0 Mol-% Pyrazol | 7,1 | 12,6 | 171,3 |
| 13g | 1,2 Mol-% Pyrazol | 9,7 | 18,8 | 165,5 |
| 13h | 1,3 Mol-% Pyrazol | 10,7 | 17,8 | 161,2 |
| 14a | 1,0 Mol-% Pyrazol, x = 0 | 7,1 | 12,6 | 171,3 |
| 14b | 1,0 Mol-% Pyrazol, x = 5 | 7,5 | 12,5 | 170,7 |
| 14c | 1,0 Mol-% Pyrazol, x = 15 | 7,8 | 13,7 | 168,4 |
| 14d | 1,0 Mol-% Pyrazol, x = 22,5 | 7,8 | 13,1 | 172,5 |
| 14e | 1,0 Mol-% Pyrazol, x = 30 | 6,0 | 9,7 | 167,0 |
| 14f | 1,0 Mol-% Pyrazol, x = 60 | 7,8 | 13,0 | 172,0 |

### Beispiel 15

9,325 g Caprolactam und 0,075 g (0,75 Gew.-%, 1,3 Mol-%) Pyrazol wurden auf 140 °C erhitzt. Nach Zugabe von 0,2 g (2 Gew.-%, 0,5 Mol-%) Aktivator (Brüggolen C20) und erneutem Erreichen der Reaktionstemperatur wurde die Polymerisation durch Hinzufügen von 0,4 g (4 Gew.-%, 0,6 Mol-%) Katalysator (Brüggolen C10) gestartet. Nach 45 min wurde die anionische Polymerisation durch Kühlung des Reaktionsgefäßes in Eiswasser (0 °C) gequencht. Die maximale Temperatur Tₘₐₓ liegt bei 171,5 °C, der Anteil an unreagierter Komponente (A) (Caprolactam) bei 5,74 Gew.-%.

### Vergleichsbeispiel 16

9,325 g Caprolactam und 0,075 g (0,75 Gew.-%, 1,3 Mol-%) Pyrazol wurden auf 140 °C erhitzt. Nach Zugabe von 0,4 g (4 Gew.-%, 0,6 Mol-%) Katalysator (Brüggolen C10) und erneutem Erreichen der Reaktionstemperatur wurde die Polymerisation durch Hinzufügen von 0,2 g (2 Gew.-%, 0,5 Mol-%) Aktivator (Brüggolen C20) gestartet. Nach 45 min wurde die anionische Polymerisation durch Kühlung des Reaktionsgefäßes in Eiswasser (0 °C) gequencht. Die maximale Temperatur Tₘₐₓ liegt bei 151,0 °C, der Anteil an unreagierter Komponente (A) (Caprolactam) bei 14,98 Gew.-%.

In Figur 2 ist das Temperatur-Zeit-Diagramm für Beispiel 15 (durchgezogene Linie) und Vergleichsbeispiel 16 (gestrichelte Linie) zu sehen. Auf der x-Achse ist die Zeit t in Sekunden (s) aufgetragen, auf der y-Achse die Temperatur T in °C. Es ist zu erkennen, dass die Polymerisation im erfindungsgemäßen Beispiel 15 für einen ähnlichen Zeitraum wie in Vergleichsbeispiel 16 retardiert wird. Nach der Induktionsperiode verläuft die Reaktion gemäß Beispiel 15 allerdings deutlich schneller und vollständiger als in Vergleichsbeispiel 16. Die schnellere Reaktion ist anhand des steileren Anstiegs der Kurve bis zur maximalen Temperatur Tₘₐₓ zu erkennen.

Anhand von Beispiel 15 im Vergleich mit Vergleichsbeispiel 16 ist außerdem zu erkennen, dass mit dem erfindungsgemäßen Verfahren ein deutlich geringerer Anteil an unreagierter Komponente (A) in dem erhaltenen Polyamid (P) erzielt wird.

## Patentansprüche

1. Verfahren zur Herstellung eines Polyamids (P), umfassend die Schritte
a) Bereitstellen einer ersten Mischung (M1), die die Komponenten
(A) mindestens ein Lactam,
(B) mindestens einen Katalysator
enthält,
b) Bereitstellen einer zweiten Mischung (M2), die die Komponenten
(A) mindestens ein Lactam,
(C) mindestens ein Aktivator,
(D) mindestens ein Amin
enthält,
c) Mischen der ersten Mischung (M1) mit der zweiten Mischung (M2) unter Erhalt einer polymerisierbaren Mischung (pM),
d) Polymerisation der in Schritt c) erhaltenen polymerisierbaren Mischung (pM) unter Erhalt des Polyamids (P).

2. Verfahren gemäß Anspruch 1, **dadurch gekennzeichnet, dass** die Komponente (D) zumindest eine NH-Gruppe oder NH₂-Gruppe enthält.

3. Verfahren gemäß Anspruch 1 oder 2, **dadurch gekennzeichnet, dass** die Komponente (D) ausgewählt ist aus der Gruppe bestehend aus primären aliphatischen Aminen, primären cycloaliphatischen Aminen, sekundären aliphatischen Aminen, sekundären cycloaliphatischen Aminen und sekundären aromatischen Aminen.

4. Verfahren gemäß einem der Ansprüche 1 bis 3, **dadurch gekennzeichnet, dass** die Komponente (A) mindestens ein Lactam mit 4 bis 12 Kohlenstoffatomen enthält.

5. Verfahren gemäß einem der Ansprüche 1 bis 4, **dadurch gekennzeichnet, dass** die Komponente (A) ausgewählt ist aus der Gruppe bestehend aus Pyrrolidon, Piperidon, ε-Caprolactam, Önanthlactam, Capryllactam, Caprinlactam und Laurolactam.

6. Verfahren gemäß einem der Ansprüche 1 bis 5, **dadurch gekennzeichnet, dass** die Komponente (B) ausgewählt ist aus der Gruppe bestehend aus Alkalimetalllactamaten, Erdalkalimetalllactamaten, Alkalimetallen, Erdalkalimetallen, Akalimetallhydriden, Erdalkalimetallhydriden, Alkalimetallhydroxiden, Erdalkalimetallhydroxiden, Alkalimetallalkoholaten, Erdalkalimetallalkoholaten, Alkalimetallamiden, Erdalkalimetallamiden, Alkalimetalloxiden, Erdalkalimetalloxiden und metallorganischen Verbindungen.

7. Verfahren gemäß einem der Ansprüche 1 bis 6, **dadurch gekennzeichnet, dass** in Schritt c) die erste Mischung (M1) mit der zweiten Mischung (M2) bei einer Temperatur im Bereich von 80 bis 140 °C gemischt wird.

8. Verfahren gemäß einem der Ansprüche 1 bis 7, **dadurch gekennzeichnet, dass** die Komponente (C) ausgewählt ist aus N-substituierten Lactamen, Diisocyanaten, Polyisocyanaten, Allophanaten und Disäurehalogeniden.

9. Verfahren gemäß einem der Ansprüche 1 bis 8, **dadurch gekennzeichnet, dass** das in Schritt d) erhaltene Polyamid (P) zusätzlich im Bereich von 1 bis 50 Gew.-% mindestens eines Füllstoffs enthält, bezogen auf das Gesamtgewicht des Polyamids (P).

10. Verfahren gemäß einem der Ansprüche 1 bis 9, **dadurch gekennzeichnet, dass** die in Schritt c) erhaltene polymerisierbare Mischung (pM) im Bereich von 55 bis 99,7 Gew.-% der Komponente (A), im Bereich von 0,1 bis 10 Gew.-% der Komponente (B), im Bereich von 0,1 bis 10 Gew.-% der Komponente (C) und im Bereich von 0,1 bis 25 Gew.-% der Komponente (D) enthält, jeweils bezogen auf das Gesamtgewicht der polymeriserbaren Mischung (pM).

11. Verfahren gemäß einem der Ansprüche 2 bis 10, **dadurch gekennzeichnet, dass** die Komponente (D) eine Aminofunktionalität von < 10 aufweist.

12. Verfahren gemäß einem der Ansprüche 1 bis 11, **dadurch gekennzeichnet, dass** die molare Masse der Komponente (D) < 500 g/mol ist.

13. Polyamid (P) erhältlich nach einem Verfahren gemäß einem der Ansprüche 1 bis 12.

14. Formkörper aus dem Polyamid (P) gemäß Anspruch 13.

## Claims

1. A process for the production of a polyamide (P), comprising the following steps:
a) provision of a first mixture (M1) which comprises the following components:
(A) at least one lactam,
(B) at least one catalyst,
b) provision of a second mixture (M2) which comprises the following components:
(A) at least one lactam,
(C) at least one activator,
(D) at least one amine,
c) mixing of the first mixture (M1) with the second mixture (M2) to give a polymerizable mixture (pM),
d) polymerization of the polymerizable mixture (pM) obtained in step c) to give the polyamide (P).

2. The process according to claim 1, wherein component (D) comprises at least one NH group or NH₂ group.

3. The process according to claim 1 or 2, wherein component (D) is selected from the group consisting of primary aliphatic amines, primary cycloaliphatic amines, secondary aliphatic amines, secondary cycloaliphatic amines and secondary aromatic amines.

4. The process according to any of claims 1 to 3, wherein component (A) comprises at least one lactam having from 4 to 12 carbon atoms.

5. The process according to any of claims 1 to 4, wherein component (A) is selected from the group consisting of pyrrolidone, piperidone, ε-caprolactam, enantholactam, caprylolactam, capric lactam and laurolactam.

6. The process according to any of claims 1 to 5, wherein component (B) is selected from the group consisting of alkali metal lactamates, alkaline earth metal lactamates, alkali metals, alkaline earth metals, alkali metal hydrides, alkaline earth metal hydrides, alkali metal hydroxides, alkaline earth metal hydroxides, alkali metal alcoholates, alkaline earth metal alcoholates, alkali metal amides, alkaline earth metal amides, alkali metal oxides, alkaline earth metal oxides and organometallic compounds.

7. The process according to any of claims 1 to 6, wherein, in step c), the first mixture (M1) is mixed with the second mixture (M2) at a temperature in the range from 80 to 140°C.

8. The process according to any of claims 1 to 7, wherein component (C) is selected from N-substituted lactams, diisocyanates, polyisocyanates, allophanates and diacyl halides.

9. The process according to any of claims 1 to 8, wherein the polyamide (P) obtained in step d) additionally comprises from 1 to 50% by weight of at least one filler, based on the total weight of the polyamide (P).

10. The process according to any of claims 1 to 9, wherein the polymerizable mixture (pM) obtained in step c) comprises, based in each case on the total weight of the polymerizable mixture (pM), from 55 to 99.7% by weight of component (A), from 0.1 to 10% by weight of component (B), from 0.1 to 10% by weight of component (C) and from 0.1 to 25% by weight of component (D).

11. The process according to any of claims 2 to 10, wherein the amino functionality of component (D) is < 10.

12. The process according to any of claims 1 to 11, wherein the molar mass of component (D) is < 500 g/mol.

13. A polyamide (P) obtainable by a process according to any of claims 1 to 12.

14. A molding made of the polyamide (P) according to claim 13.

## Revendications

1. Procédé de fabrication d'un polyamide (P), comprenant les étapes suivantes :
a) la préparation d'un premier mélange (M1), qui contient les composants suivants :
(A) au moins un lactame,
(B) au moins un catalyseur,
b) la préparation d'un deuxième mélange (M2), qui contient les composants suivants :
(A) au moins un lactame,
(C) au moins un activateur,
(D) au moins une amine,
c) le mélange du premier mélange (M1) avec le deuxième mélange (M2) pour obtenir un mélange polymérisable (pM),
d) la polymérisation du mélange polymérisable (pM) obtenu à l'étape c) pour obtenir le polyamide (P).

2. Procédé selon la revendication 1, **caractérisé en ce que** le composant (D) contient au moins un groupe NH ou un groupe NH₂.

3. Procédé selon la revendication 1 ou 2, **caractérisé en ce que** le composant (D) est choisi dans le groupe constitué par les amines aliphatiques primaires, les amines cycloaliphatiques primaires, les amines aliphatiques secondaires, les amines cycloaliphatiques secondaires et les amines aromatiques secondaires.

4. Procédé selon l'une quelconque des revendications 1 à 3, **caractérisé en ce que** le composant (A) contient au moins un lactame contenant 4 à 12 atomes de carbone.

5. Procédé selon l'une quelconque des revendications 1 à 4, **caractérisé en ce que** le composant (A) est choisi dans le groupe constitué par la pyrrolidone, la pipéridone, l'ε-caprolactame, l'énanthlactame, le capryllactame, le caprinlactame et le laurolactame.

6. Procédé selon l'une quelconque des revendications 1 à 5, **caractérisé en ce que** le composant (B) est choisi dans le groupe constitué par les lactamates de métaux alcalins, les lactamates de métaux alcalino-terreux, les métaux alcalins, les métaux alcalino-terreux, les hydrures de métaux alcalins, les hydrures de métaux alcalino-terreux, les hydroxydes de métaux alcalins, les hydroxydes de métaux alcalino-terreux, les alcoolates de métaux alcalins, les alcoolates de métaux alcalino-terreux, les amides de métaux alcalins, les amides de métaux alcalino-terreux, les oxydes de métaux alcalins, les oxydes de métaux alcalino-terreux et les composés métallo-organiques.

7. Procédé selon l'une quelconque des revendications 1 à 6, **caractérisé en ce qu'**à l'étape c), le premier mélange (M1) est mélangé avec le deuxième mélange (M2) à une température dans la plage allant de 80 à 140 °C.

8. Procédé selon l'une quelconque des revendications 1 à 7, **caractérisé en ce que** le composant (C) est choisi parmi les lactames N-substitués, les diisocyanates, les polyisocyanates, les allophanates et les halogénures de diacides.

9. Procédé selon l'une quelconque des revendications 1 à 8, **caractérisé en ce que** le polyamide (P) obtenu à l'étape d) contient en outre dans la plage allant de 1 à 50 % en poids d'au moins une charge, par rapport au poids total du polyamide (P).

10. Procédé selon l'une quelconque des revendications 1 à 9, **caractérisé en ce que** le mélange polymérisable (pM) obtenu à l'étape c) contient dans la plage allant de 55 à 99,7 % en poids du composant (A), dans la plage allant de 0,1 à 10 % en poids du composant (B), dans la plage allant de 0,1 à 10 % en poids du composant (C) et dans la plage allant de 0,1 à 25 % en poids du composant (D), à chaque fois par rapport au poids total du mélange polymérisable (pM).

11. Procédé selon l'une quelconque des revendications 2 à 10, **caractérisé en ce que** le composant (D) présente une fonctionnalité amino < 10.

12. Procédé selon l'une quelconque des revendications 1 à 11, **caractérisé en ce que** la masse molaire du composant (D) est < 500 g/mol.

13. Polyamide (P) pouvant être obtenu par un procédé selon l'une quelconque des revendications 1 à 12.

14. Corps moulé à base du polyamide (P) selon la revendication 13.
